# EUROPEAN PATENT APPLICATION

(11) **EP 4 535 837 A1**
(43) Date of publication of application: **09.04.2025**
(21) Application number: 23830068.5
(22) Date of filing: 20.06.2023
(51) Int. Cl.: H04W 4/40

(54) **V2X POLICY REQUESTING METHOD AND DEVICE**

(30) Priority: 30.06.2022 CN 202210764640
(71) Applicant: Sanechips Technology Co., Ltd., Shenzhen, Guangdong 518055 (CN)
(72) Inventor: JIN, Shanshan, Shenzhen, Guangdong 518055 (CN); ZHANG, Haoting, Shenzhen, Guangdong 518055 (CN)
(74) Representative: Savi, Massimiliano
(86) International application number: PCT/CN2023/101502
(87) International publication number: WO 2024/001889

(57) **Abstract**

Embodiments of the present disclosure provide a V2X policy requesting method and device. The method comprises: sending a registration request message to a network side device, wherein the registration request message carries a vehicle-to-everything (V2X) policy request message. The embodiments of the present disclosure further provide an electronic device and a computer-readable storage medium.

## Description

### CROSS-REFERENCE TO RELATED APPLICATION

This application claims the priority of Chinese patent application CN 202210764640.4 filed on June 30, 2022, entitled "V2X POLICY REQUESTING METHOD AND DEVICE", the disclosure of which is incorporated herein by reference in its entirety.

### TECHNICAL FIELD

Embodiments of the present disclosure relate to the field of communications, and in particular to a method for requesting vehicle-to-everything (V2X) policy, and a device.

### BACKGROUND

According to the 3rd Generation Partnership Project (3GPP) 24501 protocol R17 version, when user equipment (UE) has a UE policy of a home public land mobile network (HPLMN) or a selected public land mobile network (PLMN), it is required to carry UE STATE INDICATION in a payload container of a registration request message during the initial registration or mobile registration process when transitioning from S1 mode to N1 mode. In the absence of such a policy, the UE STATE INDICATION does not need to be carried.

When the UE needs to request a V2X policy, it sends a policy provisioning request (UE POLICY PROVISIONING REQUEST) message via the UL NASTRANPORT procedure of 5G Mobility Management (5GMM). However, if the UE lacks a local V2X policy and needs to request a policy from Point Coordination Function (PCF), the current methodology requires completing the registration process before initiating the policy request, thereby increasing signaling overhead. Additionally, the multicast communication for V2X over PC5 is currently not encrypted, making it vulnerable to message modification, deletion, and other security threats. Therefore, encrypting multicast messages is also essential.

It is thus important to reduce the signaling overhead when requesting V2X policies.

### SUMMARY

Provided are a method for requesting V2X policy , and a device in several embodiments of the present disclosure, which focus on the reduction in signaling overhead when requesting a V2X policy in the related art.

According to an embodiment of the present disclosure, a method for requesting V2X policy is provided. The method is applied to UE. The method includes: sending a registration request message to a network-side device, where the registration request message carries a V2X policy request message.

According to another embodiment of the present disclosure, a method for requesting V2X policy is provided,. The method includes: receiving, by an authentication management function (AMF), a registration request message sent from a UE, where the registration request message carries a V2X policy request message.

According to yet another embodiment of the present disclosure, a device for requesting V2X policy is provided. The device is applied to a UE. The device includes: a sending module configured to send a registration request message to a network-side device, where the registration request message carries a V2X policy request message.

According to still another embodiment of the present disclosure, a device for requesting V2X policy is provided. The device is applied to an AMF. The device includes: a receiving module configured to receive a registration request message sent from UE, where the registration request message carries a V2X policy request message.

According to still another embodiment of the present disclosure, a computer-readable storage medium is provided. The computer-readable storage medium stores a computer program executable by a processor which, when executed by the processor, causes the processor to carry any one of the above methods.

According to still another embodiment of the present disclosure, an electronic device is provided. The electronic device includes a processor, and a memory that stores a computer program executable by the processor which, when executed by the processor, causes the processor to carry any one of the above methods.

### BRIEF DESCRIPTION OF DRAWINGS

FIG. 1 is a schematic diagram of a hardware structure of a computer terminal executing a method for requesting V2X policy according to an embodiment of the present disclosure;
FIG. 2 is a flowchart of a method for requesting V2X policy according to an embodiment of the present disclosure;
FIG. 3 is another flowchart of a method for requesting V2X policy according to an embodiment of the present disclosure;
FIG. 4 is a schematic diagram of a device for requesting V2X according to an embodiment of the present disclosure;
FIG. 5 is another schematic diagram of a V2X policy requesting device according to an embodiment of the present disclosure;
FIG. 6 is a schematic diagram of a method for policy optimization according to an embodiment of the present disclosure; and
FIG. 7 is a flowchart of a method for multicast security parameter extension according to an embodiment of the present disclosure.

### DETAILED DESCRIPTION

The embodiments of the present disclosure will be described in detail below with reference to the accompanying drawings in conjunction with embodiments.

It should be noted that the terms "first", "second", etc. in the description and the claims of the present disclosure and the above-mentioned drawings are intended to distinguish similar objects and are not necessarily to describe a specific order or sequence.

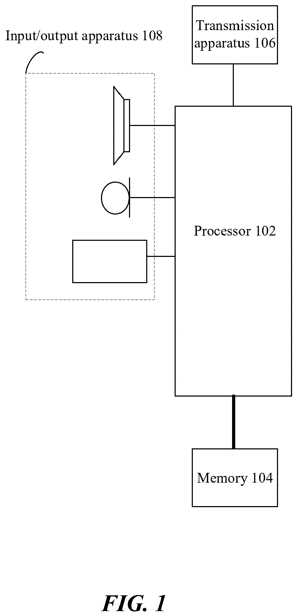

The method embodiment provided by the embodiment of the present disclosure can be executed in a mobile terminal, a computer terminal or a similar computing device. Taking a computer terminal as an example, FIG. 1 is a block diagram of a hardware structure of a computer terminal executing a method for requesting V2X policy according to an embodiment of the present disclosure. As shown in FIG. 1, a computer terminal may include one or more (only one is shown in FIG. 1) processors 102 (the processor 102 may include, but is not limited to, processing means such as a microprocessor (Central Processing Unit, MCU) or a programmable logic device (Field Programmable Gate Array, FPGA)) and a memory 104 for storing data, where the above-described computer terminal may further include a transmission apparatus 106 for communication functions and an input/output apparatus 108. Those having ordinary skills in the art can understand that the structure shown in FIG. 1 is only for illustrative purpose and does not impose a limitation on the structure of the computer terminal. For example, the computer terminal may alternatively include more or fewer components than the components shown in FIG. 1 or have a different configuration than that shown in FIG. 1.

The memory 104 may be configured to store a computer program, for example, a software program and modules for application software, such as a computer program corresponding to the method for requesting V2X policy in any one of the embodiments of the present disclosure. The processor 102 can execute various functional applications as well as data processing by running the computer program stored in the memory 104, thereby implementing the above method. The memory 104 may include a high-speed random access memory, and may also include a non-volatile memory, such as one or more magnetic storage devices, a flash memory, or other non-volatile solid-state memories. In some examples, the memory 104 may further include memories remotely located with respect to the processor 102, and these remote memories may be connected to the computer terminal via a network. Examples of the above-mentioned network include, but are not limited to, the Internet, an intranet, a local area network, a mobile communication network, and a combination thereof.

The transmission device 106 is configured for receiving or sending data via a network. Specific examples of the network described above may include a wireless network provided by a communication provider of the computer terminal. In an example, the transmission apparatus 106 includes a network interface controller (NIC), which can be connected to other network devices through a base station to communicate with the Internet. In an example, the transmission device 106 may be a radio frequency (RF) module for wirelessly communicating with the Internet.

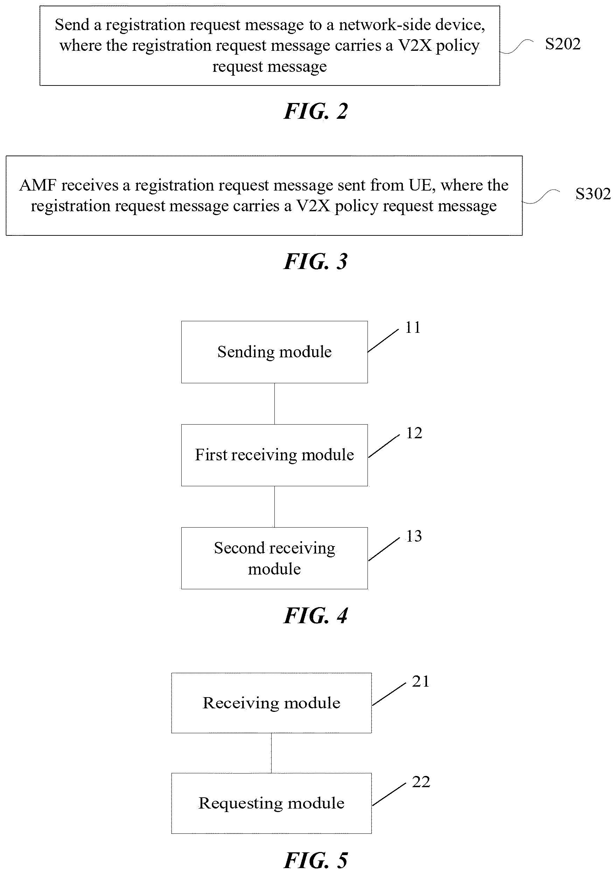

This embodiment provides a method for requesting V2X policy running on the computer terminal described above, and the method is applied to UE. FIG. 2 is a flowchart of a method for requesting V2X policy according to an embodiment of the present disclosure. As shown in FIG. 2, the process includes the following operation S202.

At operation S202, a registration request message is sent to a network-side device, where the registration request message carries a V2X policy request message.

In an implementation, operation S202 of this embodiment may include: carrying the V2X policy request message in the registration request message sent from the UE to AMF in the case where the UE does not have a V2X policy of a HPLMN or a selected PLMN, where the UE supports V2X capabilities and V2X NR-PC5.

In this embodiment, after carrying the V2X policy request message in the registration request message sent from the UE to the AMF, the method further includes one of: receiving, by the UE, a rejection message sent from the AMF for the V2X policy request; or receiving, by the UE, a V2X policy sent from the AMF, where the V2X policy includes the following parameters: whether the UE under coverage of a current PLMN supports multicast encryption, and an algorithm for obtaining a public key and a private key required for asymmetric encryption.

In an embodiment, after receiving, by the UE, a V2X policy sent from the AMF, the method further includes the operation in which: in the case where multicast encryption is supported under coverage of the current PLMN, if the UE is intended to join a UE group, the UE establishes a unicast link with a group-creating UE of the UE group and obtains a member identifier (ID) and a group ID from the group-creating UE. The group-creating UE is the one that creates the UE group. The member ID is a member identifier of the UE in the UE group. The member ID is assigned to the UE by the group-creating UE. The group ID is the ID of the UE group. Then, the UE calculates the public key and the private key based on the algorithm for the public key and the private key required for the asymmetric encryption, the member ID and the group ID, and issues the public key to the group-creating UE via the unicast link, such that the group-creating UE transfers the public key of the UE to other members within the group.

In this embodiment, the UE receives public keys of other members within the UE group sent from the group-creating UE through a unicast security policy.

In this embodiment, the method further includes: performing encryption using the private key of the UE when the UE is to send a multicast, and performing decryption using a public key of another member of the UE group when the UE receives a multicast sent from said another member of the UE group.

According to another embodiment of the present disclosure, there is further provided a method for requesting V2X policy. As shown in FIG. 3, the method includes the following operation S302.

At operation S302, AMF receives a registration request message sent from a UE. The registration request message carries a V2X policy request message.

In this embodiment, after receiving, by the AMF, a registration request message sent from the UE, the method further includes: requesting, by the AMF, a V2X policy from PCF after successful registration of the UE.

In this embodiment, after requesting, by the AMF, a V2X policy from PCF, the method further include one of the following: in response to the PCF rejecting the V2X policy request, the AMF receiving a V2X policy rejection message from the PCF and forwarding the rejection message to the UE; or in response to the PCF accepting the V2X policy request, the AMF receiving a V2X policy from the PCF and forwarding the V2X policy to the UE. The V2X policy includes the following parameters/information: indication about whether the UE under coverage of a current PLMN supports multicast encryption, and an algorithm for obtaining a public key and a private key required for asymmetric encryption.

Through the aforementioned operations, by carrying the V2X policy request message in the registration request message, the UE can obtain the V2X policy upon registration with the network-side device, thus streamlining the signaling interaction process. Additionally, to ensure the security of multicast information, two policy parameters are correspondingly added: one to determine whether multicast security is supported under the current network coverage, and another regarding the asymmetric encryption algorithm being used, which enables the use of asymmetric encryption algorithms to encrypt multicast messages. Therefore, the method addresses the issue of reducing signaling overhead when requesting V2X policies in related art, and also mitigates security threats such as message modification and deletion during communication, thus saving signaling overhead during V2X policy requests and enhancing the security of multicast communications.

Through the description of the above embodiments, those of ordinary skill in the art can understand that the method according to the above embodiments may be implemented by means of software in addition to necessary general-purpose hardware platforms, and of course may also be implemented by hardware, but the former is a preferable implementation in many cases. On the basis of this understanding, the substance or the parts that contribute to the existing technology of the technical schemes of the present disclosure may be embodied in the form of a software product, which is stored in a storage medium (such as read-only memory (ROM)/random access memory (RAM), magnetic disk, and optical disk) and include instructions to cause a terminal device (such as a mobile phone, a computer, a server, or a network device) to perform the methods of embodiments of the present disclosure.

According to an embodiment, a device for requesting V2X policy is provided. The device is configured to implement the method described in any one of the above embodiments. Those have been described above will not be repeated here. As used below, the term "module" may be a combination of software and/or hardware that implements a predefined function. Although the device described in the following embodiments may preferably be implemented in software, implementations by hardware or a combination of software and hardware are also possible and contemplated.

FIG. 4 is a schematic diagram of a device for requesting V2X policy according to an embodiment of the present disclosure. As shown in FIG. 4, the device includes: a sending module 11, a first receiving module 12, and a second receiving module 13.

The sending module 11 is configured to send a registration request message that carries a V2X policy request message to a network-side device..

The first receiving module 12 is configured to receive a rejection message for the V2X policy request sent from AMF.

The second receiving module 13 is configured to receive a V2X policy sent from the AMF. The V2X policy includes the following parameters: indication about whether the UE under coverage of a current PLMN supports multicast encryption, and an algorithm for obtaining a public key and a private key required for asymmetric encryption.

FIG. 5 is schematic diagram of another device for requesting V2X policy according to an embodiment of the present disclosure. As shown in FIG. 5, the device includes: a receiving module 21 and a requesting module 22.

The receiving module 21 is configured to receive a registration request message that carries a V2X policy request message sent from a UE.

The requesting module 22 is configured to request a V2X policy from PCF after successful registration of the UE.

It should be noted that the modules described above can be realized by software or hardware, and the latter can be implemented by but not limited to: the above modules being all located in one and the same processor; or the above modules being located separately in different processors in any combination thereof.

In order to facilitate the understanding of the technical schemes provided by the present disclosure, detailed explanation will be given hereinafter in connection with embodiments in specific scenarios.

An embodiment of the present disclosure relates to a New Radio Vehicle-to-Everything (NR-V2X) policy optimization and multicast security parameter extension method, in which a UE is allowed to obtain a V2X policy upon registration, thereby streamlining the signaling interaction process. Moreover, to protect the security of V2X-PC5 type multicast information, asymmetric encryption algorithms are employed to encrypt the messages. Correspondingly, policy parameters are added to determine whether multicast security is supported under the current network coverage and to specify the asymmetric encryption algorithm being used.

In this embodiment, the focus is primarily on terminal devices that support NR-V2X, and the implemented application environment mainly relies on a 5G wireless communication network, where the network devices involved include: UE, PCF, and AMF.

In an implementation, the UE supports V2X capabilities and supports NR-PC5. The AMF can be interconnected with a base station and the PCF.

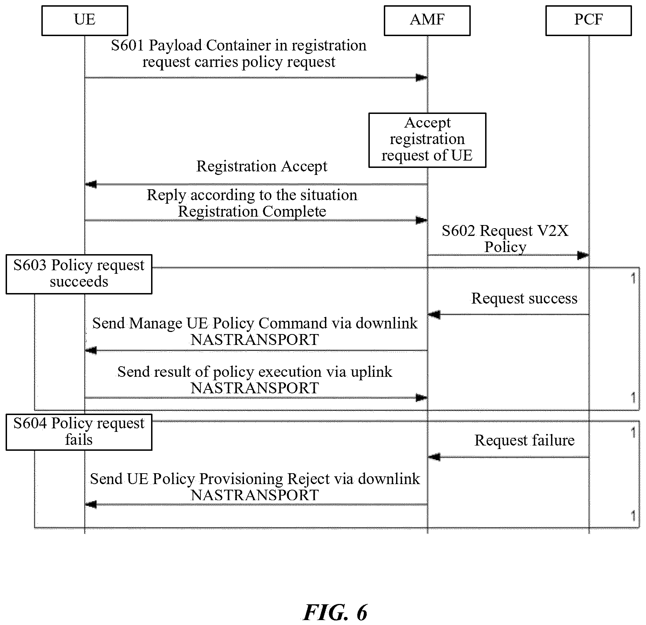

FIG. 6 is a schematic diagram of a method for policy optimization method according to an embodiment of the present disclosure. As shown in FIG. 6, the method includes the following operations S601 to S604.

At operation S601, a V2X policy request message is carried in a registration request message, in a case where a UE does not have a V2X policy of a HPLMN or a selected PLMN.

In this embodiment, the UE supports V2X capabilities and supports V2X NR-PC5, where PC5 is a direct connection solution between vehicles.

At operation S602, the AMF requests a V2X policy from PCF after successful registration.

At operation S603, in response to the PCF accepting the request, the AMF sends a Manage UE Policy Command to the UE through a downlink NASTRANSPORT procedure, in order to send the V2X policy to the UE.

At operation S604, in response to the PCF rejecting the request, the AMF sends a rejection message to the UE through the downlink NASTRANSPORT procedure.

In this embodiment, in order to support asymmetric encryption of multicast, the PCF adds two parameters on the basis of the original policy: indication about whether the UE under coverage of a current PLMN supports multicast encryption; and an algorithm for obtaining a public key and a private key required for asymmetric encryption.

In the related art, the scheme of requesting a V2X policy involves the UE sending a Policy Provisioning Request via uplink NASTransport to the AMF after the registration is completed Subsequently, the AMF requesting the policy from the PCF and replies to the UE through downlink NASTransport. In contrast, the policy optimization method of the embodiments of the present disclosure allows the UE to obtain a V2X policy upon registration, thereby reducing uplink signaling once and streamlining the signaling interaction process.

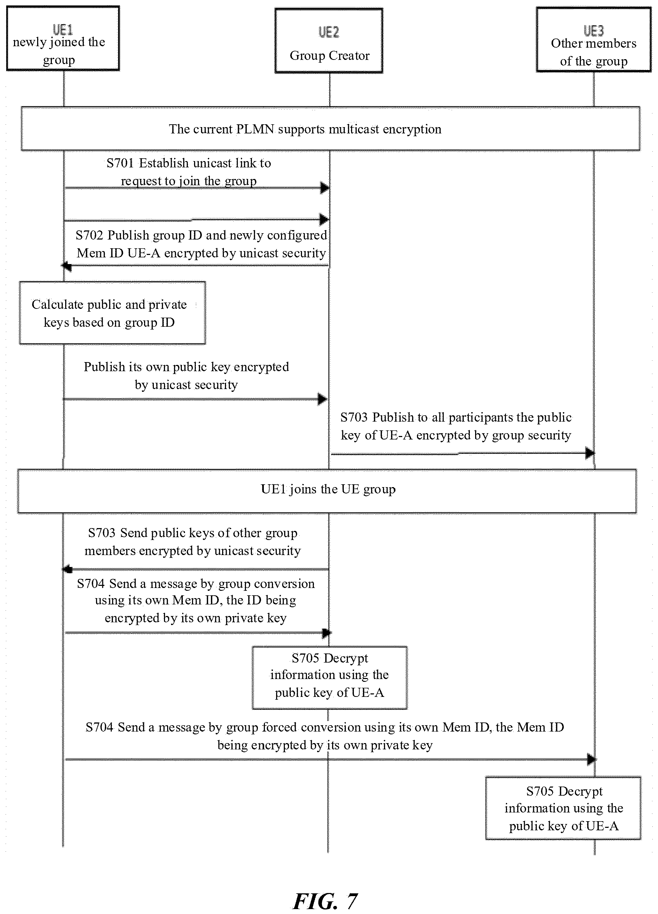

FIG. 7 is a flowchart of a multicast security parameter extension method according to an embodiment of the present disclosure. As shown in FIG. 7, the method includes the following operations S701 to S705.

At operation S701, when UE1 is intended to join a group, UE1 establishes a unicast link with a group creator UE2.

At operation S702, the group creator UE2 assigns a member ID and group ID to UE1.

At operation S703, the group creator UE2 advertises a public key of UE1 to other members UE3 in the group by means of a group security policy, and notifies UE1 of public keys of the other members UE3 in the group through a unicast security policy.

In an implementation, after UE1 obtains the V2X policy, if multicast encryption is supported under the current PLMN coverage, UE1 uses the algorithm required for asymmetric encryption, the group ID, and the member ID provided in the policy to calculate the public and private keys, and then issues its public key to the group creator UE2 via the unicast link. The issue process of public keys is protected by the unicast security policy.

At operation S704, when UE1 sends a multicast, encryption is performed by means of the private key of UE1.

At operation S705, when group members UE2 and UE3 perform reception, decryption is performed using the public key of UE1.

In the related art, the scheme of requesting a V2X policy does not perform encryption during multicast transmissions, which poses certain security threats. In contrast, the multicast security parameter extension method according to the embodiments of the present disclosure can use asymmetric encryption based on the V2X policy of the UE to protect multicast messages, ensuring the security of the multicast information during the communication process.

According to an embodiment of the present disclosure, a computer-readable storage medium is provided. The computer-readable storage medium stores a computer program executable by a processor which, when executed by the processor, causes the processor to carry out the method of any of the above method embodiments.

In an example embodiment, the above-mentioned computer-readable storage medium may include, but is not limited to, various media that can store computer programs, such as a USB flash drive, read-only memory (ROM), random access memory (RAM), mobile hard disk, magnetic disk or optical disk.

According to an embodiment of the present disclosure, an electronic device is provided. The electronic device includes a processor, and a memory that store a computer program executable by a processor which, when executed by the processor, causes the processor to carry out the method of any of the above method embodiments .

In an example embodiment, the electronic device above may further include a transmission device and an input/output device, where the transmission device is connected to the processor and the input/output device is connected to the processor.

For specific examples of this embodiment, the examples described in the above embodiments and example implementations can be referred to, which will not be repeated here in this embodiment.

It is apparent that, those of ordinary skill in the art should understand that the above modules or steps of the present disclosure may be implemented by a general-purpose computing device and may be concentrated in one single computing device or distributed in a network composed of a plurality of computing devices, and may be implemented by program codes executable by a computing device, so that they can be stored in a storage device and executed by the computing device(s). Moreover, in some cases, the steps shown or described herein can be performed in a different order, or they can be made into individual integrated circuit modules, or a plurality of the modules or steps can be made into one single integrated circuit module. As such, the present disclosure is not limited to any particular combination of hardware and software.

The above is only the description of several embodiments of the present disclosure and is not intended to limit the present disclosure. It will be apparent to those of ordinary skill in the art that various modifications and variations can be made to the present disclosure. Any modifications, equivalent substitutions, improvements, etc. made within the principle of the present disclosure shall fall within the scope of protection of the present disclosure.

## Claims

1. A method for requesting vehicle-to-everything (V2X) policy, which is applied to user equipment (UE), the method comprising:
sending a registration request message to a network-side device, wherein the registration request message carries a V2X policy request message.

2. The method of claim 1, wherein sending the registration request message to the network-side device comprises:
carrying the V2X policy request message in the registration request message sent from the UE to authentication management function (AMF) in response to an exclusion of a V2X policy of an exclusion of a home public land mobile network (HPLMN) or a selected public land mobile network (PLMN) within the UE , wherein the UE supports V2X capabilities and V2X NR-PC5.

3. The method of claim 2, wherein after carrying the V2X policy request message in the registration request message sent from the UE to the AMF, the method further comprises one of:
receiving, by the UE, a rejection message sent from the AMF for the V2X policy request; or
receiving, by the UE, a V2X policy sent from the AMF;
wherein the V2X policy comprises:
an indication about whether the UE under coverage of a current PLMN supports multicast encryption; and
an algorithm for obtaining a public key and a private key required for asymmetric encryption.

4. The method of claim 3, wherein after receiving, by the UE, the V2X policy sent from the AMF, the method further comprises:
establishing, by the UE upon joining a UE group, a unicast link with a group-creating UE of the UE group and obtaining, by the UE, a member identifier (ID) and a group ID from the group-creating UE, in response to a determination that multicast encryption is supported under coverage of the current PLMN; and
calculating, by the UE, the public key and the private key based on the algorithm for the public key and the private key required for the asymmetric encryption, the member ID and the group ID, and issuing, by the UE, the public key to the group-creating UE via the unicast link, to notify the group-creating UE of advertising the public key of the UE to an additional member within the UE group.

5. The method of claim 4, further comprising:
receiving, by the UE, a public key of the additional member within the UE group sent from the group-creating UE through a unicast security policy.

6. The method of claim 5, further comprising:
performing encryption by means of the private key of the UE by the UE, upon sending a multicast, and performing decryption by means of the public key of the additional member of the UE group when the UE receives a multicast sent from the additional member of the UE group.

7. A method for requesting vehicle-to-everything (V2X) policy, comprising:
receiving, by an authentication management function (AMF), a registration request message sent from a user equipment (UE), wherein the registration request message carries a V2X policy request message.

8. The method of claim 7, wherein after receiving, by the AMF, the registration request message sent from the UE, the method further comprises:
requesting, by the AMF, the V2X policy from point coordination function (PCF) after successful registration of the UE.

9. The method of claim 8, wherein after requesting, by the AMF, the V2X policy from the PCF, the method further comprises one of:
receiving, by the AMF, a V2X policy rejection message from the PCF and forwarding the rejection message to the UE, in response to a rejection on the V2X policy request by the PCF; or
receiving, by the AMF, a V2X policy from the PCF in response to an acceptance of the V2X policy request by the PCF, and
forwarding by the AMF, the V2X policy to the UE;
wherein the V2X policy comprises:
an indication about whether the UE under coverage of a current PLMN supports multicast encryption, and
an algorithm for obtaining a public key and a private key required for asymmetric encryption.

10. A device for requesting vehicle-to-everything (V2X) policy, which is applied to user equipment (UE), the device comprising:
a sending module configured to send a registration request message to a network-side device, wherein the registration request message carries a V2X policy request message.

11. The device of claim 10, further comprising:
a first receiving module configured to receive a rejection message sent from an authentication management function (AMF) for the V2X policy request; and
a second receiving module configured to receive a V2X policy sent from the AMF, wherein the V2X policy comprises: an indication about whether the UE under coverage of a current PLMN supports multicast encryption, and an algorithm for obtaining a public key and a private key required for asymmetric encryption.

12. A device for requesting vehicle-to-everything (V2X) policy , which is applied to authentication management function (AMF), the device comprising:
a receiving module configured to receive a registration request message sent from a user equipment (UE), wherein the registration request message carries a V2X policy request message.

13. The device of claim 12, further comprising:
a requesting module configured to request the V2X policy from point coordination function (PCF) after successful registration of the UE.

14. A computer-readable storage medium storing a computer program executable by a processor which, when executed by the processor, causes the processor to carry out the method of any one of claims 1 to 6, or the method of any one of claims 7 to 9.

15. An electronic device, comprising: a processor, and a memory that stores a computer executable by the processor which, when executed by the processor, causes the processor to carry out the method of any one of claims 1-6 or the method of any one of claims 7-9.
